# EUROPÄISCHE PATENTANMELDUNG

(11) **EP 2 402 574 A1**
(43) Veröffentlichungstag der Anmeldung: **04.01.2012**
(21) Anmeldenummer: 11171851.6
(22) Anmeldetag: 29.06.2011
(51) Int. Cl.: F01P 11/10, F01P 7/10, B60K 11/08

(54) **Kühlluftführungssystem für ein Fahrzeug**

(30) Priorität: 29.06.2010 DE 102010017636
(71) Anmelder: AKsys GmbH, 67547 Worms (DE)
(72) Erfinder: Kobiela, Andreas, 73765 Neuhausen (DE); Gabor, Thomas, 73240 Wendlingen (DE)
(74) Vertreter: Müller, Frank Peter

(57) **Zusammenfassung**

Die Erfindung betrifft ein Klappenventil (20) zum wahlweise Freigeben oder Absperren eines Luftströmungsweges in einem Kraftfahrzeug (21), das von einer den Luftströmungsweg freigebenden Öffnungsstellung (18) in eine den Luftströmungsweg absperrenden Schließstellung, und umgekehrt, betätigbar ist, und das wenigstens zwei plattenförmige Klappen (6, 9) umfasst, die über ein Klappengelenk (14) relativ zueinander verschwenkbar miteinander verbunden sind. Zwischen dem Kühler (5) und dem Motor (2) des Kraftfahrzeugs (21) ist ein Luftleitkanal (23) für die Kühlluft angeordnet, der zu dem Kühler (5) hin offen ist und der ferner zu einer im Bereich des Fahrzeugunterbodens (3) angeordneten Bodenöffnung (24) hin offen ist. Eine dem Kühler (5) zugeordnete erste Klappe (6) der Klappen (6, 9) und eine mit der ersten Klappe (6) über das Klappengelenk (14) verbundene, dem Fahrzeugunterboden (3) zugeordnete zweite Klappe (9) der Klappen (6, 9) sind über einen mechanischen Mechanismus (25) derart mit dem Kühler (5) und/oder einem benachbarten Bauteil des Kraftfahrzeugs (21) und mit dem Fahrzeugunterboden (3) und/oder einem benachbarten Bauteil des Kraftfahrzeugs (21) gekoppelt, dass in der Schließstellung des Klappenventils (20) der Luftleitkanal (23) auf seiner dem Kühler (5) zugeordneten Seite bzw. der Kühler (5) durch die erste Klappe (6) abgedeckt bzw. abgesperrt ist und dass der Luftleitkanal (23) auf seiner der Bodenöffnung (24) zugeordneten Seite bzw. die Bodenöffnung (24) durch die zweite Klappe (9) abgedeckt bzw. abgesperrt ist. In der Öffnungsstellung (18) des Klappenventils (20) ist der Luftströmungsweg durch den Luftleitkanal (23) freigegeben, so dass dann die Kühlluft durch den Kühler (5) in den Luftleitkanal (23) und von dort durch die Bodenöffnung (24) unter das Kraftfahrzeug (21) bzw. unter den Fahrzeugunterboden (3) ausströmen kann.

## Beschreibung

Die Erfindung betrifft ein Klappenventil zum wahlweise Freigeben oder Absperren eines Luftströmungsweges in Kraftfahrzeugen, das von einer den Luftströmungsweg freigebenden Öffnungsstellung in eine den Luftströmungsweg absperrenden Schließstellung, und umgekehrt, betätigbar ist, und das wenigstens zwei plattenförmige Klappen umfasst, die über ein Klappengelenk relativ zueinander verschwenkbar bzw. klappbar miteinander verbunden sind.

Derartige Klappenventile und ähnliche Klappenkonstruktionen sind beispielsweise aus der DE 198 28 469 A1, der DE 25 04 475 B, der DE-A-2 412 098 und der DE 35 44 922 A1 bekannt geworden. Der Einsatz der dort offenbarten Klappenkonstruktionen ist auf eine Steuerung bzw. Regelung von Luftströmungen im Zusammenhang mit Einrichtungen zur Klimatisierung oder Belüftung des Fahrzeuginnenraumes beschränkt, wobei bei diesen Klappenkonstruktionen eine möglichst kleine und kompakte Bauweise und/oder günstige Steuerungs- bzw. Regelungsmöglichkeiten im Vordergrund stehen.

Aus der DE 196 45 091 A1 ist eine Wärmeübertragungsanordnung in Form eines Kühlers für ein Kraftfahrzeug bekannt geworden, an den sich eine Lüfteranordnung anschließt, die schmäler ist als der Kühler, so dass auf beiden Seiten des Lüfters passive Kühlflächen ausgebildet sind, die im Betrieb des Lüfters nicht aktiv durchströmt werden. Zur Verbesserung des Wirkungsgrades ist zu beiden Seiten neben dem Lüfter jeweils ein Luftleitkanal integriert, der zum Kühler hin über dessen gesamte Höhe offen gestaltet ist und eine geschlossene Rückwand aufweist. Im Bereich des unteren Endes des Kühlers ist der jeweilige Luftleitkanal nach hinten umgelenkt und verjüngt sich anschließend zu einer düsenartigen Einschnürung in seinem Ausgangsbereich. Anschließend an die düsenartige Einschnürung ist der jeweilige Luftleitkanal offen gestaltet, so dass die den jeweiligen Luftleitkanal durchströmende Luft jeweils nach hinten unter den Fahrzeugunterboden des Motorraumes abgelenkt wird. Dabei ergibt sich konstruktionsbedingt im Ausströmbereich ein Venturi-Effekt, der eine verbesserte Durchströmung auch der passiven Kühlflächen des Kühlers ermöglicht.

Bei dieser Konstruktion, aber auch bei anderen allgemein bekannten Kühleranordnungen in Kraftfahrzeugen kann es nach dem Durchtritt der Kühlluft durch den Kühler zu einer diffusen Verwirbelung der Kühlluft im Motorraum kommen, wodurch sich ein dementsprechend erhöhter Fahrwiderstand bzw. Strömungswiderstandskoeffizient/Luftwiderstandsbeiwert (CW-Wert) und ein dementsprechend erhöhter Geräuschpegel ergeben kann. Der Kühler kann als ein akustisch offenes System angesehen werden.

Außerdem kann bei der Kraftfahrzeug-Kühler-Konstruktion gemäß der DE 196 45 091 A1 und auch gemäß anderen allgemein bekannten Kühlerkonstruktionen von Kraftfahrzeugen das Problem auftreten, dass der Motor nach einem Kaltstart nur vergleichsweise langsam seine Betriebstemperatur erreicht. Dies wiederum kann dazu führen, dass eine Beheizung des Fahrzeuginnenraumes in Verbindung mit den üblicherweise zu diesem Zwecke eingesetzten Wärmetauschern nur vergleichsweise langsam erreichbar ist, da die Temperatur der zur Innenraumbeheizung über den Wärmetauscher erwärmten Heizluft proportional zu der nur langsam ansteigenden Temperatur des Motors ansteigt.

Es ist deshalb eine Aufgabe der Erfindung, ein Klappenventil bzw. ein Kühlluftführungssystem für ein Fahrzeug mit einem derartigen Klappenventil zur Verfügung zu stellen, mit dem sowohl ein schnelleres Erreichen der Betriebstemperatur des Motors des Kraftfahrzeugs erreichbar ist, als auch eine reduzierte Geräuschentwicklung und ein reduzierter Fahrwiderstand bzw. Strömungswiderstandskoeffizient/Luftwiderstandsbeiwert (CW-Wert), das einfach und kostengünstig herstellbar ist und das vorteilhafte Möglichkeiten zur Einsparung von Gewicht und Kraftstoff sowie für eine Geräuschdämmung bietet.

Diese Aufgabe wird durch die Merkmale des Anspruches 1 insbesondere dadurch gelöst, dass das Kraftfahrzeug einen einem Motorraum zugeordneten Motor, einen Fahrzeugunterboden, insbesondere des Motorraums, und einen Kühler zur direkten oder indirekten, insbesondere über das Motoröl erfolgenden, Kühlung des Motors mittels Kühlluft aufweist, wobei zwischen dem Kühler und dem Motor ein Luftleitkanal für die Kühlluft angeordnet ist, der zu dem Kühler hin offen ist, um ein Einströmen von Kühlluft in den Luftleitkanal zu ermöglichen und der ferner zu einer im Bereich des Fahrzeugunterbodens angeordneten Bodenöffnung hin offen ist, um ein Ausströmen der Kühlluft aus dem Luftleitkanal unter das Fahrzeug bzw. unter den Fahrzeugunterboden zu ermöglichen, wobei eine dem Kühler zugeordnete erste Klappe der Klappen und eine mit der ersten Klappe über das Klappengelenk verbundene, dem Fahrzeugunterboden zugeordnete zweite Klappe der Klappen über einen mechanischen Mechanismus derart mit dem Kühler und/oder mit einem benachbarten Bauteil des Kraftfahrzeugs und mit dem Fahrzeugunterboden und/oder einem benachbarten Bauteil des Kraftfahrzeugs gekoppelt sind, das in der Schließstellung des Klappenventils der Luftleitkanal auf seiner dem Kühler zugeordneten Seite bzw. der Kühler durch die erste Klappe abgedeckt bzw. abgesperrt ist, und dass ferner in der Schließstellung des Klappenventils der Luftleitkanal auf seiner der Bodenöffnung zugeordneten Seite bzw. die Bodenöffnung durch die zweite Klappe abgedeckt bzw. abgesperrt ist, und dass in der Öffnungsstellung des Klappenventils der Luftströmungsweg durch den Luftleitkanal freigegeben ist, so dass dann die Kühlluft durch den Kühler in den, vorzugsweise von den Klappen zumindest teilweise begrenzten, Luftleitkanal und von dort durch die Bodenöffnung unter das Fahrzeug bzw. unter den Fahrzeugunterboden ausströmen kann bzw. ausströmt.

Gemäß einer vorteilhaften Ausgestaltung der Erfindung kann vorgesehen sein, dass die dem Kühler zugeordnete erste Klappe an dem Kühler und/oder an einem benachbarten Bauteil des Kraftfahrzeugs direkt oder indirekt, vorzugsweise über einen ersten Lenker, über ein erstes Gelenk angelenkt ist, und dass die dem Fahrzeugunterboden zugeordnete zweite Klappe an dem Fahrzeugunterboden und/oder an einem benachbarten Bauteil des Kraftfahrzeugs direkt oder indirekt, beispielsweise über einen weiteren Lenker, über ein zweites Gelenk angelenkt ist, und wobei ein drittes Gelenk vorgesehen ist, das in einem Abstand zu dem ersten Gelenk und in einem Abstand zu dem zweiten Gelenk, vorzugsweise zwischen dem ersten Gelenk und dem zweiten Gelenk, mit einer Klappe der Klappen oder mit dem Klappengelenk verbunden ist oder mit dem Klappengelenk ausgebildet ist, wobei an dem dritten Gelenk ein, gegebenenfalls zweiter bzw. weiterer, Lenker angelenkt ist, der in einem Abstand zu dem dritten Gelenk über ein viertes Gelenk an dem Kühler und/oder einem benachbarten Bauteil des Kraftfahrzeugs angelenkt ist, so dass bei bzw. nach einem Überführen des Klappenventils von seiner Schließstellung in seine Öffnungsstellung, und umgekehrt, sowohl die erste Klappe um einen ersten Schwenkwinkel um das erste Gelenk verschwenkt wird bzw. ist, als auch die zweite Klappe um einen zweiten Schwenkwinkel um das zweite Gelenk verschwenkt wird bzw. ist. Ein derartig ausgestaltetes Klappenventil löst die Erfindungsaufgabe in besonders vorteilhafter Art und Weise. Insbesondere lässt sich ein derartiges Klappenventil besonders einfach und kostengünstig sowie robust herstellen und ein derartiges Klappenventil hat eine einwandfrei sichere und exakte Funktion über eine lange Zeit.

Allgemein gesprochen können die Klappen vorzugsweise über Gelenke an Fahrzeugkomponenten angelenkt sein und durch Drehung der Gelenke können die Klappen bewegt werden, wodurch der Luftleitkanal geöffnet bzw. geschlossen werden kann.

Das Klappenventil kann vorzugsweise nicht nur in eine Schließ-Endstellung und in eine Öffnungs-Endstellung betätigt werden, sondern es kann bevorzugt auch in ein oder mehrere Zwischenstellungen überführbar sein. Auf diese Weise kann die Luftströmung durch den Luftleitkanal nicht nur zwischen Null bzw. einem Minimal- und einem Maximalwert eingestellt werden, sondern es lassen sich dann auch Luftströmungswerte einstellen, die zwischen dem Minimalwert und dem Maximalwert liegen. Auf diese Weise kann eine feinfühligere Steuerung bzw. Regelung des den Kühler durchströmenden Kühlluftstromes erreicht werden und infolge dessen eine dementsprechend feinfühlige Steuerung bzw. Regelung der Temperatur bzw. Aufheizgeschwindigkeit des Motors.

Ferner kann vorgesehen sein, dass in der Öffnungsstellung des Klappenventils die Klappen jeweils etwa parallel zu Stirnwandteilen einer sich zwischen dem Motor und dem Kühler erstreckenden Stirnwand angeordnet sind und zusammen mit dem Klappengelenk die Stirnwand zum Motorraum bzw. zum Motor hin derart abdecken, dass die den Kühler durchströmende Kühlluft, insbesondere über den Luftleitkanal, im wesentlichen nicht in den Motorraum strömen kann bzw. strömt. Auf diese Weise lassen sich störende Verwirbelungen des Kühlluftstromes im Motorraum besonders vorteilhaft verringern bzw. unterbinden.

Eine weitere Verbesserung kann dadurch erreicht werden, dass an den Klappen und/oder an der Stirnwand und an dem Kühler oder einem benachbarten Bauteil des Kraftfahrzeugs Dichtungen derart angeordnet sind, dass sowohl in der Schließstellung des Klappenventils Kühlluft weder durch den Kühler noch durch die Bodenöffnung in den Luftleitkanal und in den Motorraum eindringen kann, als auch in der Öffnungsstellung des Klappenventils die durch den Kühler in und durch den Luftleitkanal strömende Luft nicht in den Motorraum eindringen kann.

Die Stirnwand kann mit vertikalen, sich seitlich von Stirnseiten der Klappen erstreckenden Seitenwandteilen und mit vertikalen, sich quer, vorzugsweise senkrecht, zu den Seitenwandteilen sowie sich zwischen dem Kühler und dem Motor erstreckenden Rückwandteilen gebildet sein, an denen die Klappen in der Öffnungsstellung des Klappenventils, gegebenenfalls unter Zwischenlage einer Dichtung oder mehrerer Dichtungen bzw. der Dichtungen, anliegen können.

Bevorzugt können die Klappen und/oder die Dichtung bzw. die Dichtungen aus Kunststoff, insbesondere aus einem sprizgegossenen oder extrudierten, vorzugsweise thermoplastischen, Kunststoff hergestellt sein. Als Dichtungen können bevorzugt Elastomere, insbesondere thermoplastische Elastomere (TPE), Silikon oder Polyuretan (PU) eingesetzt werden. Dadurch ist nicht nur eine besonders kostengünstige Herstellung möglich, sondern auch eine Reduktion des Gewichts des Klappenventils. Dies ermöglicht nicht nur eine einfachere und schnellere Betätigung des Klappenventils, sondern ermöglicht auch eine weitere Einsparung von Kraftstoff und dementsprechend von CO₂-Emissionen.

Von besonderem Vorteil ist es, wenn das Klappenventil an bzw. in einem Frontend bzw. Frontendbauteil des Kraftfahrzeugs integriert ist. Ein derartiges Frontend bzw. Frontendbauteil kann ebenfalls bevorzugt aus Kunststoff bestehen, wodurch sich das Gewicht nochmals deutlich reduzieren lässt.

Eine besonders kostengünstige Herstellung kann dadurch erreicht werden, dass die Dichtung bzw. die Dichtungen und die Klappen und/oder die Stirnwand und/oder zumindest Teile des Kühlers und/oder ein dem Kühler benachbartes Bauteil des Kraftfahrzeugs, beispielsweise ein Frontend bzw. Frontendbauteil, in einem Zwei-Komponenten-Spritzgießverfahren hergestellt sind bzw. werden.

Alternativ kann vorgesehen sein, dass die Dichtung bzw. die Dichtungen durch Anspritzen oder Anextrudieren von thermoplastischem Kunststoff an die Klappe bzw. an die Klappen und/oder an die Stirnwand und/oder zumindest an Teile des Kühlers und/oder an ein dem Kühler benachbartes Bauteil des Kraftfahrzeugs beispielsweise an ein Frontend bzw. Frontendbauteil, hergestellt sind bzw. werden. Mit anderen Worten können in einem ersten Schritt die Klappen und/oder die Stirnwand und/oder zumindest Teile des Kühlers und/oder ein dem Kühler benachbartes Bauteil des Kraftfahrzeugs, beispielsweise ein Frontend bzw. Frontendbauteil, hergestellt sein bzw. werden und in einem nachfolgenden Schritt können die Dichtungen an den Klappen und/oder an der Stirnwand und/oder zumindest an Teilen des Kühlers und/oder an einem dem Kühler benachbarten Bauteil des Kraftfahrzeugs, beispielsweise an einem Frontendbauteil bzw. Frontend, befestigt, insbesondere angespritzt oder anextrudiert, sein bzw. werden.

Eine besonders vorteilhafte Herstellung und insbesondere ein besonders sicherer und langlebiger Betrieb des Klappenventils kann dadurch ermöglicht werden, dass das Klappengelenk mit einem Filmscharnier oder als ein Filmscharnier aus Kunststoff und/oder mit oder aus einem flexiblen und elastischen Scharnier aus Kunststoff, vorzugsweise aus einem Elastomer, gebildet ist. Ein derartiges Scharnier kann entweder in einem Zwei-Komponenten-Verfahren bzw. durch Anspritzen, mit den Klappen aus Kunststoff hergestellt und verbunden sein oder kann ein derartiges Scharnier nach seiner Herstellung an den Klappen befestigt sein.

Zur weiteren Gewichtsreduzierung kann vorgesehen sein, dass die Klappen im Spritzgießverfahren unter Injektion von Gas in die Kunststoffschmelze, beispielsweise im MuCell^{®}-Verfahren herstellt werden können.

Ferner kann vorgesehen sein, dass die Klappen akustisch wirksame Körper enthalten bzw. als akustisch wirksame Körper, insbesondere mit einem Schaum und/oder einem Flies und/oder einem mikroperforierten Blech aus Kunststoff oder Metall, insbesondere Aluminium, ausgebildet sind. Derartige akustisch wirksame Körper können bei der Herstellung der Klappen aus Kunststoff hinterspritzt oder hinterpresst werden oder können nachträglich auf den bzw. an den Klappen befestigt werden, vorzugsweise durch Aufsiegeln, Aufkleben oder mittels Ultraschallschweißen.

Das Klappenventil kann mit Hilfe eines Betätigungsmittels, beispielsweise mit Hilfe eines elektrischen oder elektromagnetischen Aktuators oder mit Hilfe eines Vakuum-Aktuators betätigbar sein bzw. betätigt werden. Ein derartiges Betätigungsmittel kann direkt oder indirekt, beispielsweise über einen Betätigungskörper, insbesondere eine Betätigungsstange, mit einer Klappe der Klappen oder mit dem Klappengelenk oder mit dem dritten Gelenk gekoppelt werden oder sein.

Es versteht sich, dass hinter dem Kühler, insbesondere in dem sich an diesen in Richtung zu dem Motorraum bzw. Motor anschließenden Luftleitkanal, eine Lüfteranordnung bzw. wenigstens ein Lüfter eingebaut sein kann. Ein derartiger Lüfter kann, wie an sich bekannt, insbesondere im Stillstand des Fahrzeugs, dazu dienen, die Kühlluft durch den Kühler anzusaugen, um auf diese Weise selbst bei einem Stillstand des Fahrzeugs eine Kühlung des Kühlers und folglich des Motors erreichen zu können. In diesem Fall kann in Richtung des Motors bzw. Motorraums bzw. hinter dem Kühler ein sich an diesen in Richtung zum Motor bzw. Motorraum hin anschließender Luftleitkanal vorgesehen sein, in welchem der bzw. die Lüfter angeordnet ist bzw. sind. Dieser, den Lüfter enthaltende Luftleitkanal kann mittels einer Klappe des Klappenventils in dieser Schließstellung abgedeckt bzw. abgesperrt werden bzw. sein. Der Lüfter ist also dann nicht nur in der Schließstellung, sondern auch in der Öffnungsstellung des Klappenventils zwischen dem Kühler und einer bzw. der ersten Klappe angeordnet.

Es versteht sich, dass im Bereich des Kühlers, beispielsweise in einem Frontend bzw. Rahmen für den Kühler, weitere Luftleitkanäle integriert sein können, die beim Öffnen des Klappenventils ebenfalls frei gegeben werden können, wodurch beispielsweise eine Luftzufuhr zur Kühlung eines Getriebes, eines Turboladers, einer Batterie, einer Bremse, eines Abgaskrümmers oder anderer Fahrzeugteile möglich sein kann.

Es versteht sich ferner, dass die vorstehenden Merkmale und Maßnahmen im Rahmen der Ausführbarkeit beliebig kombiniert werden können.

Weitere Vorteile, Merkmale und Gesichtspunkte der Erfindung ergeben sich aus den Patentansprüchen und dem nachfolgenden Beschreibungsteil, in dem ein bevorzugtes Ausführungsbeispiel der Erfindung anhand der Zeichnungen beschrieben ist.

Es zeigen:
- Fig. 1:: in einem schematischen vertikalen Längsschnitt eine Frontpartie eines Personenkraftwagens im Bereich eines Motorraumes, mit einem erfindungsgemäßen Klappenventil in seiner Schließstellung;
- Fig. 2:: eine der Figur 1 entsprechende Ansicht, wobei sich nunmehr das Klappenventil in seiner Öffnungsstellung befindet;
- Fig. 3:: einen schematischen Teil-Querschnitt entlang der Schnittlinien A-A in Figur 1;
- Fig. 4:: einen schematischen Teil-Querschnitt entlang der Schnittlinien B-B in Figur 1;
- Fig. 5:: in einem Querschnitt ein erfindungsgemäßes Klappengelenk in Form eines Scharniers aus einem flexiblen und elastischen Kunststoff;
- Fig. 6:: in einem Querschnitt ein bevorzugtes weiteres Ausführungsbeispiel eines erfindungsgemäßen Klappengelenks in Form eines Filmscharniers.

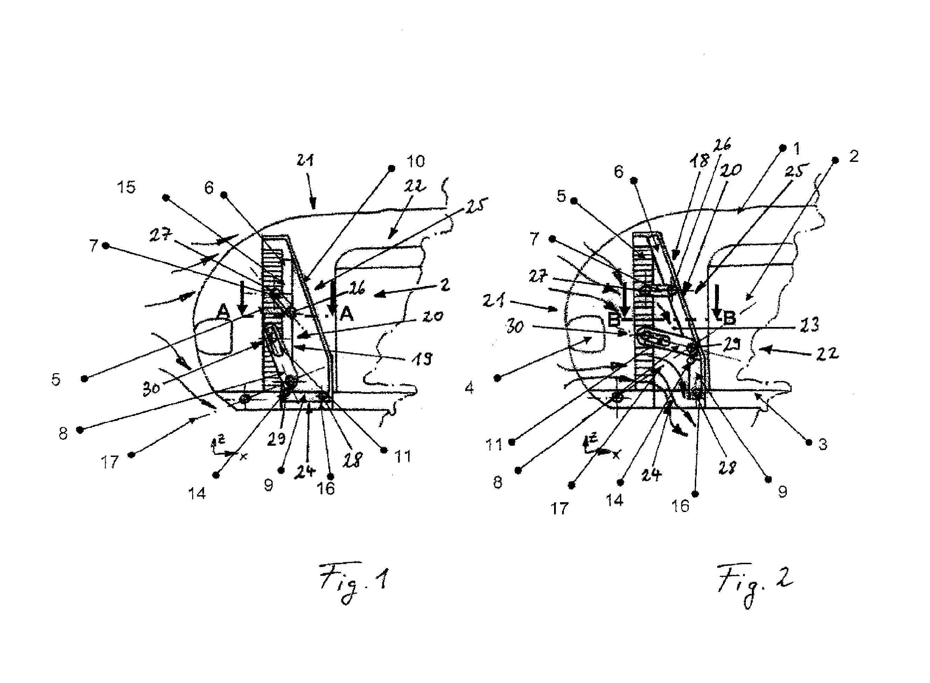

In den Figuren 1 und 2 ist jeweils eine Frontpartie eines Personenkraftfahrzeugs 21 im Bereich eines Motorraumes 22 gezeigt, in dem ein Motor 2 zum Antreiben des Kraftfahrzeugs 21 angeordnet ist. Übliche Teile, wie Getriebe und Räder, sind nicht gezeichnet. In Fahrtrichtung vor dem Motor 2 ist ein Kühler 5 zum Kühlen des Motors 2 angeordnet. Der Kühler 5 ist beim Fahren in Fahrtrichtung durch Kühlluft des Fahrtwindes beaufschlagbar und/oder kann, insbesondere dann, wenn das Fahrzeug nicht bewegt wird, durch Kühlluft beaufschlagt werden, die von einem nicht gezeigten, hinter dem Kühler angeordneten Lüfter durch den Kühler hindurch ansaugbar ist. Hinter dem Kühler 5 bzw. zwischen dem Kühler 5 und dem Motor 2 ist ein erfindungsgemäßes Klappenventil 20 zum wahlweise gesteuerten oder geregelten Freigeben oder Absperren eines Luftströmungsweges durch einen Luftleitkanal 23 angeordnet. Das Klappenventil 20 kann von einer den Luftströmungsweg durch den Luftleitkanal 23 absperrenden und in Figur 1 gezeigten Schließstellung 19, in eine den Luftströmungsweg durch den Luftleitkanal 23 freigebenden und in Figur 2 gezeigten Öffnungsstellung 18, mittels eines nicht näher gezeigten Betätigungsmittels, vorzugsweise eines elektrischen, elektromagnetischen, hydraulischen oder pneumatischen Aktuators, beispielsweise eines Vakuum-Aktuators, betätigt werden, und umgekehrt.

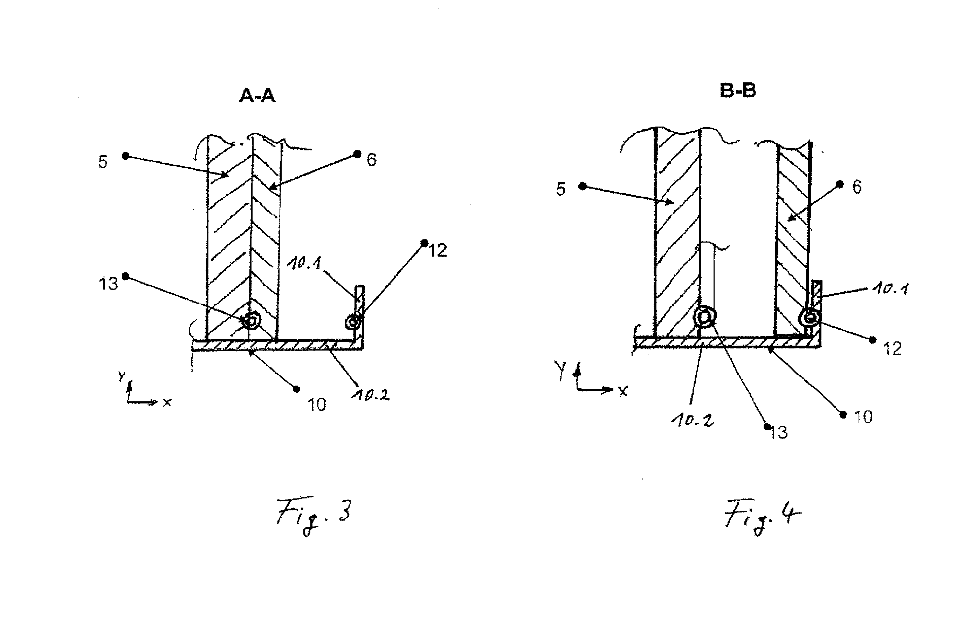

Der Luftströmungskanal 23 ist auf seiner dem Kühler 5 zugeordneten Seite zu dem Kühler 5, hier über dessen gesamte Höhe, offen und ist auf seiner anderen Seite bzw. andernends zu einer im Fahrzeugunterboden 3 bzw. in der Unterbodenverkleidung des Fahrzeugs 21 vorgesehenen Bodenöffnung 24 hin offen. Der Luftleitkanal 23 wird zum Motorraum 22 bzw. Motor 2 hin und auch zu den Seiten hin durch eine vertikale Stirnwand 10 eines Gehäuses begrenzt. In den Figuren 3 und 4 ist in den dort dargestellten Querschnitten ein Teil der Stirnwand 10 veranschaulicht. Diese weist jeweils eine Seitenwand 10.2 und eine sich dazu hier senkrecht erstreckende Rückwand 10.1 auf und weist in den Querschnittsbereichen einen L-förmigen Querschnitt auf. Das Klappenventil 20 weist hier zwei plattenförmige Klappen 6, 9 auf, die miteinander durch ein Klappengelenk 14 verbunden sind. Die Klappen 6, 9 des Klappenventils 20 sind über einen mechanischen Mechanismus 25 derart mit dem Kühler 5 bzw. einem nicht näher gezeigten Frontendträger mit Kühler, ggf. mit integriertem, ebenfalls nicht gezeigten Lüfter, und mit dem Fahrzeugunterboden 3 derart gekoppelt, dass in der Schließstellung 19 des Klappenventils 20 der Luftleitkanal 23 auf seiner dem Kühler 5 zugeordneten Seite bzw. der Kühler 5 durch eine erste, obere Klappe 6 abgedeckt bzw. abgesperrt ist und dass ferner in der Schließstellung 19 des Klappenventils 20 der Luftleitkanal 23 auf seiner der Bodenöffnung 24 zugeordneten Seite bzw. die Bodenöffnung 24 durch die zweite, untere Klappe 9 abgedeckt bzw. abgesperrt ist. In der Schließstellung 19 des Klappenventils 20 kann also Kühlluft weder durch den Kühler 5 in den Luftleitkanal 23 noch durch die Bodenöffnung 24 in den Luftleitkanal 23 gelangen, und folglich auch nicht in den Motorraum 22. Auf diese Weise kann es zu keinen störenden Verwirbelungen der Kühlluft im Motorraum kommen. Außerdem kann durch das Abdecken bzw. Absperren des Kühlers 5 und demgemäß durch ein Unterbinden einer Kühlluftströmung durch den Kühler 5 ein schnelles Hochheizen des Motors 2 auf Betriebstemperatur erreicht werden. Wenn, wie üblich, der Fahrzeuginnenraum des Kraftfahrzeugs 21 über die Wärme des Motors 2, beispielsweise indirekt über einen Wärmetauscher, beheizbar ist, der von dem Motoröl des Motors 2 ebenso durchströmt wird, wie der Kühler 5, kann durch das Absperren des Luftströmungsweges bzw. des Kühlers 5 eine dementsprechend schnellere Beheizung des Fahrzeuginnenraumes erreicht werden.

In der in Figur 2 gezeigten Öffnungsstellung 18 des Klappenventils 20 ist der Luftströmungsweg durch den Luftleitkanal 23 freigegeben, so dass in dieser Stellung des Klappenventils 20 die Kühlluft durch den Kühler 5 in den Luftleitkanal 23 und von dort durch die Bodenöffnung 24 unter das Fahrzeug 21 bzw. unter den Fahrzeugunterboden 3 des Fahrzeugs 21 ausströmen kann bzw. fahrtwindbedingt und/oder bedingt durch ein Ansaugen durch den nicht gezeigten Lüfter ausströmt.

Die dem Kühler 5 zugeordnete erste, obere Klappe 6 ist an dem Kühler 5 bzw. an einem benachbarten Bauteil über einen ersten, oberen Lenker 7 angelenkt. Dazu ist der Lenker 7 einerends über ein erstes Gelenk 26 in einem Abstand zu dem oberen Ende der Klappe 6 an der Klappe 6 angelenkt und ist andernends über ein Gelenk 27 an dem Kühler 5 oder einem benachbarten Bauteil angelenkt. Im Abstand zu dem ersten Gelenk 26 ist an der ersten, oberen Klappe 6 ein weiteres bzw. drittes Gelenk 29 vorgesehen, das hier in der Nähe des Klappengelenks 14 angeordnet ist. An diesem weiteren bzw. dritten Gelenk 29 angelenkt ist im Bereich eines seiner Enden ein zweiter, unterer Lenker 8. Dieser weist andernends eine hier mit einem Langloch gebildete Kulissenführung 11 auf, über welche der Lenker 8 um eine Gelenkachse verschwenkbar und relativ zu dieser verschiebbar an dem Kühler 5 oder an einem benachbarten Bauteil angelenkt ist.

Die über das Klappengelenk 14 mit der ersten, oberen Klappe 6 verschwenkbar verbundene zweite, untere Klappe 9 ist im Bereich ihres von dem Klappengelenk 14 weg weisenden Endes über ein zweites Gelenk 28 an dem Fahrzeugunterboden 3 oder einem benachbarten Bauteil des Fahrzeugs 21 angelenkt. Durch den so gebildeten mechanischen Mechanismus 25 können die Klappen 6 und 9 von den in Figur 1 gezeigten Schließstellungen 19 in die in Figur 2 gezeigten Öffnungsstellungen 18 überführt werden, und umgekehrt.

Ein zu diesem Zwecke vorsehbares Betätigungsmittel, beispielsweise ein Aktuator, kann bevorzugt im Bereich des dritten Gelenks 29 direkt oder indirekt über ein Betätigungsglied angreifen und kann andernends direkt oder indirekt, ebenfalls gelenkig an dem Fahrzeugunterboden 3 oder einem benachbarten Bauteil des Kraftfahrzeugs 21 angelenkt sein. Die Antriebsachse 17 eines derartigen Betätigungselements bzw. Aktuators ist in den Figuren 1 und 2 schematisch in Form einer strichpunktierten Linie eingezeichnet.

Wie aus den Figuren 1 und 2 ersichtlich, weist die Rückwand 10.1 der Stirnwand 10 in den gezeigten vertikalen Querschnitten zwei in einem Winkel zueinander angeordnete, jeweils geradlinig begrenzte Wandteile auf. An diesen Wandteilen der Stirnwand 10 können die Klappen 6 und 9 mit ihren nach hinten weisenden Rückflächen in der Öffnungsstellung 18 des Klappenventils 20, wie in Figur 2 gezeigt, anliegen, so dass dann die den Kühler durchströmende und in den Luftleitkanal 23 einströmende sowie diesen durchströmende Kühlluft nicht in den Motorraum 22 strömen kann bzw. strömt.

Um dies noch besser sicherstellen zu können, kann, wie in Figur 4 gezeigt, wenigstens eine Dichtung 12 vorgesehen sein, die umlaufend ausgebildet sein kann, so dass dann, wenn die Klappen 6 und 9 an der Rückwand 10.1 der Stirnwand 10 anliegen, eine sichere Abdichtung des Luftleitkanals 23 zum Motorraum 22 hin erreicht ist.

Im Unterschied dazu liegt die erste, obere Klappe 6 in ihrer Schließstellung 19, wie in Figur 1 gezeigt, an dem Kühler 5 bzw. an einem Frontendträger mit Kühler an, so dass ein Hindurchströmen von Kühlluft durch Fahrtwind durch den Kühler 5 unterbunden ist. Dann kann durch den Kühler 5 hindurch keine Kühlluft in den Luftleitkanal 23 gelangen. Um hier eine sichere Abdichtung zu gewährleisten, kann, wie in Figur 3 gezeigt, wenigstens eine weitere Dichtung 13 vorgesehen sein, die ebenfalls umlaufend ausgebildet sein kann. Wenn, wie in Figur 3 gezeigt, die obere Klappe 6 gegen den Kühler 5 anliegt, bewirkt die Dichtung 13 eine sichere Abdichtung dieser beiden Bauteile zueinander und folglich eine sichere Abdichtung des Kühlers 5 gegenüber dem Luftleitkanal 23.

Aus der Figur 1 geht ferner hervor, dass die zweite, untere Klappe in der Schließstellung 19 des Klappenventils 20 die Bodenöffnung 24 verschließt, so dass in dieser Stellung auch keine Kühlluft von unten durch die Bodenöffnung 24 in den Luftleitkanal 23 und von dort in den Motorraum 22 strömen kann. Auch hier kann zur verbesserten Abdichtung wenigstens eine Dichtung eingesetzt sein.

Sowohl die Klappen 6 und 9 als auch die Dichtungen 12, 13 bestehen vorzugsweise aus Kunststoff. Insbesondere können die Klappen 6, 9 und/oder die Dichtungen 12, 13 durch Spritzgießen von thermoplastischem Kunststoff, bevorzugt im Zwei-Komponenten-Spritzgießverfahren, hergestellt sein.

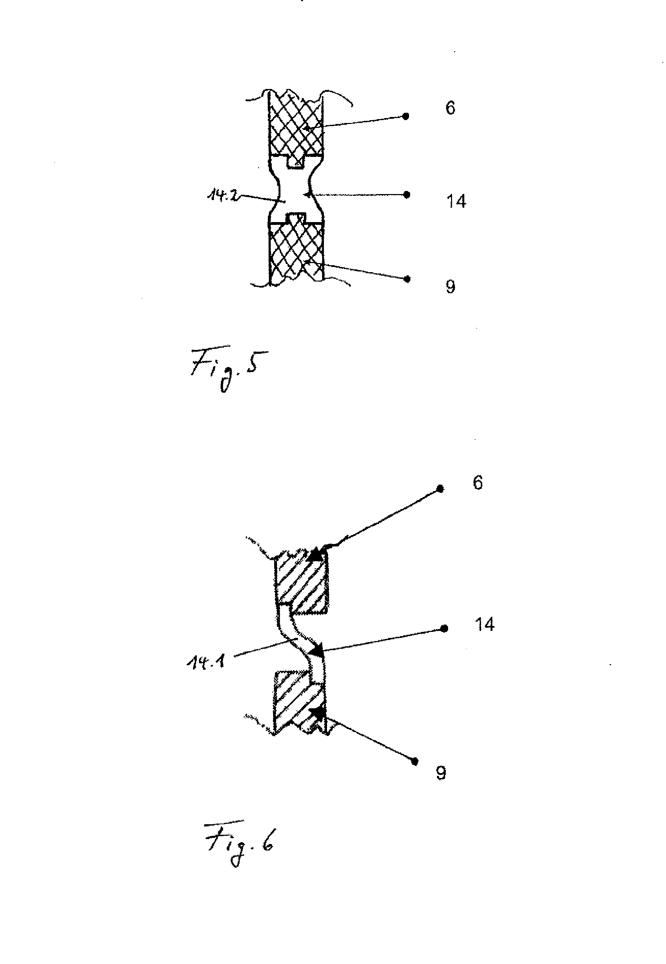

Das die beiden Klappen 6 und 9 verbindende Klappengelenk 14 bzw. Klappenscharnier kann, beispielsweise wie in den Figuren 5 und 6 gezeigt, gestaltet und befestigt sein. Bei dem Ausführungsbeispiel gemäß Figur 5 ist das Klappengelenk 14 durch ein Scharnier aus einem flexiblen und elastischen Kunststoff gebildet. Die Klappen 6 und 9 sind formschlüssig mit dem Scharnier 14.2 verbunden.

Bei dem in Figur 6 gezeigten Ausführungsbeispiel ist das Klappengelenk 14 mit einem Filmscharnier 14.1 aus Kunststoff, vorzugsweise aus einem Elastomer, gebildet. Der das Filmscharnier ausbildende Scharnierkörper ist in Befestigungsnuten der Klappen 6 und 9 befestigt, die auf entgegengesetzten Seiten der Klappen 6 und 9 vorgesehen sind. Bei zueinander fluchtenden Klappen 6 und 9 ergibt sich auf diese Weise ein S-förmiger Verlauf des Scharnierkörpers des Filmscharniers.

### BEZUGSZEICHENLISTE

- 1.: Motorhaube
- 2.: Motor
- 3.: Fahrzeugunterboden/ Unterbodenverkleidung
- 4.: Stoßfänger
- 5.: Kühler/Frontendträger mit Kühler (ohne Lüfter gezeichnet)
- 6.: erste/obere Klappe
- 7.: erster/oberer Lenker
- 8.: zweiter/unterer Lenker
- 9.: zweite/untere Klappe
- 10.: Innenwand/Gehäuse
- 10.1: Rückwand von 10
- 10.2: Seitenwand von 10
- 11.: Kulissenführung/ Langloch
- 12.: Dichtung
- 13.: Dichtung
- 14.: Klappengelenk/ Scharnier
- 14.1: Filmscharnier
- 14.2: Scharnier
- 16.: Drehachse
- 17.: Antriebsachse
- 18.: Öffnungsstellung
- 19.: Schließstellung
- 20.: Klappenventil
- 21.: (Personen)Kraftfahrzeug
- 22.: Motorraum
- 23.: Luftleitkanal
- 24.: Bodenöffnung
- 25.: mechanischer Mechanismus
- 26.: erstes Gelenk
- 27.: Gelenk
- 28.: zweites Gelenk
- 29.: drittes Gelenk
- 30.: viertes Gelenk

## Patentansprüche

1. Klappenventil zum wahlweise Freigeben oder Absperren eines Luftströmungsweges in Kraftfahrzeugen, das von einer den Luftströmungsweg freigebenden Öffnungsstellung (18) in eine den Luftströmungsweg absperrenden Schließstellung (19), und umgekehrt, betätigbar ist, und das wenigstens zwei plattenförmige Klappen (6, 9) umfasst, die über ein Klappengelenk (14) relativ zueinander verschwenkbar miteinander verbunden sind, **dadurch gekennzeichnet,**
**dass** das Kraftfahrzeug (21) einen einem Motorraum (22) zugeordneten Motor (2), einen Fahrzeugunterboden (3) und einen Kühler (5) zur Kühlung des Motors (2) mittels Kühlluft aufweist, wobei zwischen dem Kühler (5) und dem Motor (2) ein Luftleitkanal (23) für die Kühlluft angeordnet ist, der zu dem Kühler (5) hin offen ist, um ein Einströmen von Kühlluft in den Luftleitkanal (23) zu ermöglichen und der ferner zu einer im Bereich des Fahrzeugunterbodens (3) angeordneten Bodenöffnung (24) hin offen ist, um ein Ausströmen der Kühlluft aus dem Luftleitkanal (23) unter das Kraftfahrzeug (21) bzw. unter den Fahrzeugunterboden (3) zu ermöglichen, wobei eine dem Kühler (5) zugeordnete erste Klappe (6) der Klappen (6, 9) und eine mit der ersten Klappe (6) über das Klappengelenk (14) verbundene, dem Fahrzeugunterboden (3) zugeordnete zweite Klappe (9) der Klappen (6, 9) über einen mechanischen Mechanismus (25) derart mit dem Kühler (5) und/oder einem benachbarten Bauteil des Kraftfahrzeugs (21) und mit dem Fahrzeugunterboden (3) und/oder einem benachbarten Bauteil des Kraftfahrzeugs (21) gekoppelt sind, dass in der Schließstellung (19) des Klappenventils (20) der Luftleitkanal (23) auf seiner dem Kühler (5) zugeordneten Seite bzw. der Kühler (5) durch die erste Klappe (6) abgedeckt bzw. abgesperrt ist, und dass ferner in der Schließstellung (19) des Klappenventils (20) der Luftleitkanal (23) auf seiner der Bodenöffnung (24) zugeordneten Seite bzw. die Bodenöffnung (24) durch die zweite Klappe (9) abgedeckt bzw. abgesperrt ist, und dass in der Öffnungsstellung (18) des Klappenventils (20) der Luftströmungsweg durch den Luftleitkanal (23) freigegeben ist, so dass dann die Kühlluft durch den Kühler (5) in den Luftleitkanal (23) und von dort durch die Bodenöffnung (24) unter das Kraftfahrzeug (21) bzw. unter den Fahrzeugunterboden (3) ausströmen kann.

2. Klappenventil nach Anspruch 1, **dadurch gekennzeichnet, dass** die dem Kühler (5) zugeordnete erste Klappe (6) an dem Kühler (5) und/oder an einem benachbarten Bauteil des Kraftfahrzeugs direkt oder indirekt, vorzugsweise über einen ersten Lenker (7), über ein erstes Gelenk (26) angelenkt ist, und dass die dem Fahrzeugunterboden (3) zugeordnete zweite Klappe (9) an dem Fahrzeugunterboden (3) und/oder an einem benachbarten Bauteil des Kraftfahrzeugs direkt oder indirekt, beispielsweise über einen weiteren Lenker, über ein zweites Gelenk (28) angelenkt ist, und wobei ein drittes Gelenk (29) vorgesehen ist, das in einem Abstand zu dem ersten Gelenk (26) und in einem Abstand zu dem zweiten Gelenk (28) mit einer Klappe (6) der Klappen (6, 9) oder mit dem Klappengelenk verbunden ist oder mit dem Klappengelenk ausgebildet ist, wobei an dem dritten Gelenk (29) ein, ggf. zweiter bzw. weiterer, Lenker (8) angelenkt ist, der in einem Abstand zu dem dritten Gelenk (29) über ein viertes Gelenk (30) an dem Kühler (5) und/oder einem benachbarten Bauteil des Kraftfahrzeugs (21) angelenkt ist, so dass bei bzw. nach einem Überführen des Klappenventils (20) von seiner Schließstellung (19) in seine Öffnungsstellung (18), und umgekehrt, sowohl die erste Klappe (6) um einen ersten Schwenkwinkel um das erste Gelenk (26) verschwenkt wird bzw. ist als auch die zweite Klappe (9) um einen zweiten Schwenkwinkel um das zweite Gelenk (28) verschwenkt wird bzw. ist.

3. Klappenventil nach Anspruch 1 oder 2, **dadurch gekennzeichnet, dass** in der Öffnungsstellung (18) die Klappen (6, 9) jeweils etwa parallel zu Stirnwandteilen (10.1, 10.2) einer sich zwischen dem Motor (2) und dem Kühler (5) erstreckenden Stirnwand (10) angeordnet sind und zusammen mit dem Klappengelenk (14) die Stirnwand (10, 10.1) zum Motorraum (22) bzw. zum Motor (2) hin derart abdecken, dass die den Kühler (5) durchströmende Kühlluft, insbesondere über den Luftleitkanal (23), im Wesentlichen nicht in den Motorraum (22) strömen kann bzw. strömt.

4. Klappenventil nach einem der Ansprüche 1 bis 3, **dadurch**
**gekennzeichnet, dass** an den Klappen und/oder an der Stirnwand und an dem Kühler oder einem benachbarten Bauteil des Kraftfahrzeugs Dichtungen (12, 13) derart angeordnet sind, dass sowohl in der Schießstellung (19) des Klappenventils (20) Kühlluft weder durch den Kühler (5) noch durch die Bodenöffnung (24) in den Luftleitkanal (23) und in den Motorraum (22) eindringen kann, als auch in der Öffnungsstellung (18) des Klappenventils (20) die durch den Kühler (5) in und durch den Luftleitkanal (23) strömende Luft nicht in den Motorraum (22) eindringen kann.

5. Klappenventil nach einem der Ansprüche 1 bis 4, **dadurch gekennzeichnet, dass** die Stirnwand (10) mit vertikalen, sich seitlich von Stirnseiten der Klappen (6, 9) erstreckenden Seitenwandteilen (10.2) und mit vertikalen, sich quer, vorzugsweise senkrecht, zu den Seitenwandteilen (10.2) sowie sich zwischen dem Kühler (5) und dem Motor (2) erstreckenden Rückwandteilen (10.1) gebildet ist, an denen die Klappen (6, 9) in der Öffnungsstellung (18) des Klappenventils (20), ggf. unter Zwischenlage einer Dichtung (12), anliegen.

6. Klappenventil nach Anspruch 4 oder 5, **dadurch gekennzeichnet, dass** die Klappen (6, 9) und/oder die Dichtung (12) bzw. die Dichtungen (12, 13), insbesondere aus einem spritzgegossenen oder extrudierten, vorzugsweise thermoplastischen, Kunststoff hergestellt sind.

7. Klappenventil nach einem der Ansprüche 4 bis 6, **dadurch gekennzeichnet, dass** die Dichtung (12) bzw. die Dichtungen (12, 13) und die Klappen (6, 9) und/oder die Stirnwand (10) und/oder zumindest Teile des Kühlers und/oder ein dem Kühler benachbartes Bauteil des Kraftfahrzeugs (21), beispielsweise ein Frontendbauteil (10), in einem Zweikomponenten-Sprießgießverfahren hergestellt sind.

8. Klappenventil nach einem der Ansprüche 4 bis 6, **dadurch gekennzeichnet, dass** die Dichtung (12) bzw. die Dichtungen (12, 13) durch Anspritzen oder Anextrudieren von thermoplastischem Kunststoff an die Klappe bzw. die Klappen und/oder an die Stirnwand und/oder zumindest an Teile des Kühlers und/oder an ein dem Kühler benachbartes Bauteil des Kraftfahrzeugs, beispielsweise an ein Frontendbauteil, hergestellt sind bzw. werden.

9. Klappenventil nach einem der Ansprüche 1 bis 8, **dadurch gekennzeichnet, dass** das Klappengelenk (14) mit einem Filmscharnier (14.1) aus Kunststoff und/oder mit einem flexiblen und elastischen Scharnier (14.2) aus Kunststoff, vorzugsweise aus einem Elastomer, gebildet ist, das entweder in einem Zweikomponenten-Verfahren, beispielsweise durch Anspritzen, mit den Klappen (6, 9) aus Kunststoff hergestellt und verbunden ist oder das nach seiner Herstellung an den Klappen (6, 9) befestigt ist.

10. Klappenventil nach einem der Ansprüche 1 bis 9, **dadurch gekennzeichnet, dass** die Klappen akustisch wirksame Körper enthalten bzw. als akustisch wirksame Körper, insbesondere mit einem Schaum und/oder einem Vlies und/oder einem mikroperforierten Blech, ausgebildet sind.
